# EUROPEAN PATENT SPECIFICATION

(11) **EP 0 255 857 B1**
(45) Date of publication and mention of the grant of the patent: **14.09.1994**
(21) Application number: 87107576.8
(22) Date of filing: 22.05.1987
(51) Int. Cl.: G06F 9/44, G06F 9/46, G06F 15/16

(54) **Multiple processor system**
Mehrfachrechnersystem
Système de processeurs multiples

(30) Priority: 23.05.1986 JP 117351/86
(43) Date of publication of application: 17.02.1988
(73) Proprietor: HITACHI, LTD., Chiyoda-ku, Tokyo 101 (JP)
(72) Inventor: Hamanaka, Naoki, Tokyo (JP); Tanaka, Teruo, Hachioji-shi Tokyo (JP); Omada, Koichiro, Sagamihara-shi Kanagawa-ken (JP); Nagashima, Shigeo, Hachioji-shi Tokyo (JP)
(74) Representative: Strehl Schübel-Hopf Groening & Partner

(56) References cited:
- EP-A- 0 052 712
- WO-A-84/03192
- THE 4TH ANNUAL SYMPOSIUM ON COMPUTER ARCHITECTURE, 23rd - 25th March 1977, pages 193-200, IEEE, New York, US; M.T. LIU et al.: "Message communication protocol and operating system design for the distributed loop computer network (DLCN)"
- FIFTH ANNUAL INTERNATIONAL PHOENIX CONFERENCE ON COMPUTERS AND COMMUNICATIONS, Scottsdale, Arizona, 26th - 28t March 1986, pages 215-221, IEEE, New York, US; R. CHUGH: "A network-wide interprocess communication facility for the XENIX operating system"

## Description

### BACKGROUND OF THE INVENTION

This invention relates to a parallel processor consisting of a plurality of processors that can operate in parallel with one another.

As one of the methods of improving a processing speed, there is known a method which constitutes a parallel processor system equipped with a plurality of processors operable in parallel with one another and various reports have been made in the past on such a technique. (For instance, refer to ACM Transactions on Computer Systems, Vol. 1, No. 3, August, 1983, pages 195 - 221.)

For programming in the conventional parallel processor system, a program consisting of the aggregate of units of work is generated and each of the units of work are executed in parallel so that one processing can be executed as a whole. This unit of work consists of a program and control information necessary for the execution of the program, but the present invention will hereinafter deal primarily with the program alone. Accordingly, the unit of work will be hereinafter called a "process" and a group of such processes, a "job". In the parallel processor system, one or a plurality of groups (jobs) are executed in parallel with one another.

When programming is made in the conventional systems of this kind, it has been necessary to divide processing to be executed into a plurality of processes and to rely upon a hardware construction of the system to make program description for communication between the processes. In other words, it has been necessary to determine in advance which process is to be allotted to which processor.

Furthermore, in order to establish communication from a certain process to another such as transfer of data from the former to the latter, programming must be made so that the receiving process designates the identification number of the processor that is allotted at present. This needs excessive labor of a programmer when preparing the program. In addition, when the number of processors changes such as when the number is increased or decreased due to trouble or the like, the programs that have been prepared previously cannot be used as such.

The conventional technique described above is not free from the drawback that the program of the parallel processor system depends greatly on the hardware and casts a burden on a programmer. Another problem is that portability of the program is low with respect to the change of the hardware construction of the parallel processor system. This means that system versatility is low.

In "The 4th Annual Symposium of Computer Architecture", 23rd-25th March 1977, pages 193-200, IEEE is disclosed a multiple computer system which are interconnected in a network, wherein data transfer from one computer to another is accomplished by providing a first identification code for locating the proper computer and a second identification code for identifying the process which is to receive the data. In this system, a message with the name of a data receiving process is transferred to every machine in the network and every machine checks, if this process is allotted to this computer. This system of communicating used much processing time as every computer or processor is interrupted in order to check if the receiving process has been allotted to the corresponding processor each time a data transfer is to take place.

It is therefore object of the invention to provide a parallel processor system capable of executing a plurality of programs simultaneously without interrupting every processor each time a data transfer is to take place between any two of the processors.

This object is met by the invention as described in any of claims 1, 20, 21 and 22.

The invention and its preferred embodiments will further be described in conjunction with the attached drawings, in which
Fig. 1 shows an embodiment of a parallel processor system of the present invention;
Fig. 2 shows signals inside a data register 6 in the system shown in Fig. 1;
Fig. 3 shows signals inside a send register 7 in the system shown in Fig. 1;
Fig. 4 shows signals inside a receive register 8 in the system shown in Fig. 1;
Fig. 5 shows signals in a data register 9 in the system shown in Fig. 1;
Fig. 6 shows the construction of a send address translator 4 in the system shown in Fig. 1;
Fig. 7 shows the construction of a send address translator in another embodiment of the present invention;
Fig. 8 shows the construction of a send address translator in still another embodiment of the present invention;
Fig. 9A shows the construction of a send address translator in still another embodiment of the present invention;
Fig. 9B shows the construction of a receive address translator to be used in combination with the apparatus shown in Fig. 9A;
Fig. 10 shows the construction of a send address translator in still another embodiment of the present invention; and
Fig. 11 shows still another embodiment of the present invention.

### DESCRIPTION OF THE PREFERRED EMBODIMENTS

Hereinafter, the present invention will be described in further detail with reference to some preferred embodiments shown in the accompanying drawings.

### [Embodiment 1]

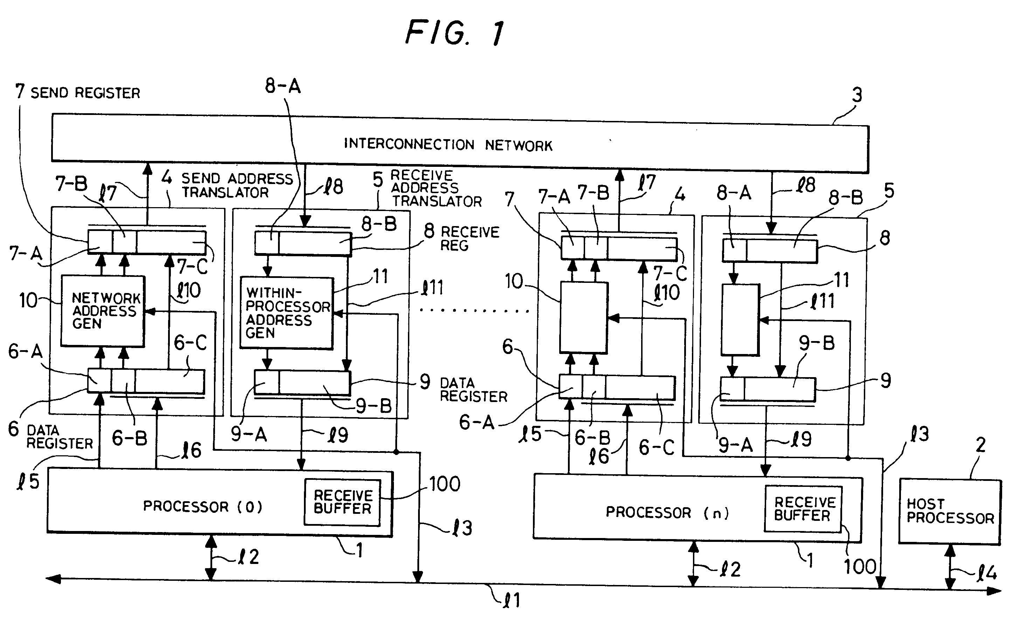

Fig. 1 shows a first embodiment of a parallel processor system in accordance with the present invention.

This system consists of n+1 processors 1 having the same construction. They will be hereinafter called "processor (0) ∼ processor (n)". The drawing. shows only the processors (0) and (l) for simplification.

First of all, the program to be executed by this parallel processor system will be explained. One job consists of a plurality of processes that can be executed in parallel with one another. A number called "job number" is assigned to each job. The job number is managed in such a manner that each job number is unique in this parallel processor system at each time and different jobs cannot have the same job number. A number starting from zero (0) is put to the processes constituting the job and called a "within-job process number".

A given process can send data to other processes belonging to the same job. At this time, the within-job process number is designated as the address of the data to be sent.

When a given job is executed, a plurality of processes constituting that job are distributed by a host processor to various processors. To distinguish the processes distributed to the same processor at this time, a number starting from zero (0) and called "within-processor process number" is determined.

In summary, two kinds of codes exist in order to primarily distinguish the processes in this parallel processor system. One is a code which uses the set of the job number and the within-job process number and the other is a code which uses the set of the processor number to which the process is allotted and the within-processor process number.

When each process sends data to other processes in this embodiment, the set of the numbers of the former is used to designate the receiving process, and in this data transfer, the set of the numbers of the former is translated to the set of the numbers of the latter and the set of the numbers after translation is used in order to effect data transfer to the processor to which the receiving process is allotted.

In Fig. 1, reference numeral 2 represents a host processor, 3 is an interconnection network for the data transfer between the processors 0 to n, 4 is a send address translator and 5 is a receive address translator.

Though the same send address translator and the same receive address translator are provided to the processor not shown in the drawing, they are omitted from the drawing.

In the send address translator 4, reference numeral 6 represents a data register, 7 is a send register and 10 is a network address generator. In the receive address translator 5, reference numeral 8 represents a receive register, 9 is a data register and 11 is a within-processor-address generator.

The host processor 2 is of a program control type processor and programmed in such a manner as to send data to each part of the parallel processor system through channels ℓ4, ℓ1, ℓ2, ℓ3 and to control each processor.

Which process constituting a given job is to be allotted to which processor is determined in advance and a necessary process is loaded to a program memory (not shown) inside each processor in accordance with this determination.

Each processor 1 is of a program control type processor which can operate independently of one another, and is formed, for example, by connecting a memory and others to a Microprocessor MC68000 of Motorola Inc.

Each processor 1 has a receive buffer 100, which consists of a plurality of fields allotted to the processes executed in that processor, respectively.

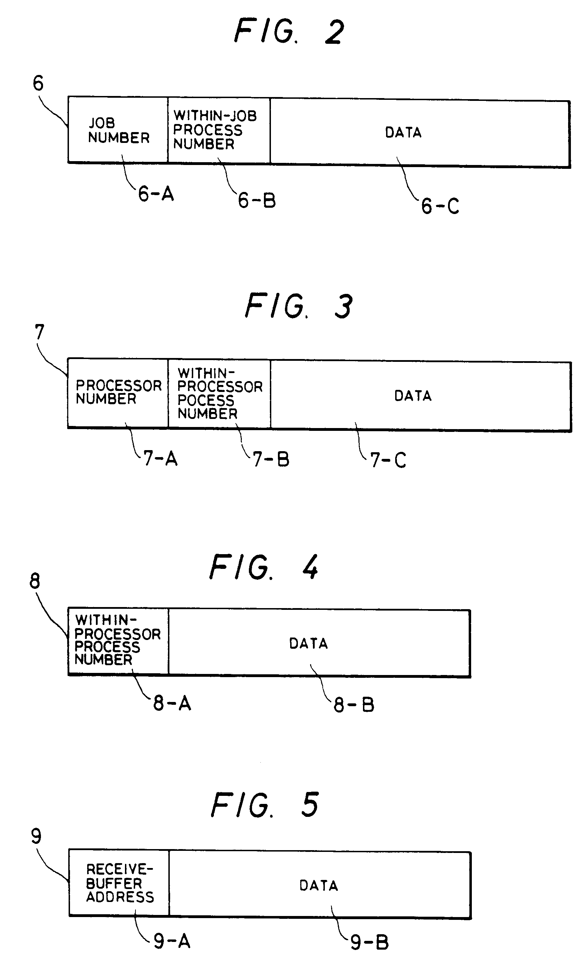

Each processor 1 is programmed so that when the execution of a given process is started, the processor 1 gives in advance the job number of the job to which the process belongs to the field 6-A of the data register 6 in the corresponding receive address translator 5 through the channel ℓ5. When the process that is being executed sends data to the process allotted to other processor, the processor 1 is programmed so that it outputs the within-job process number of the receiving process and the data to be transferred to the fields 6-B and 6-C of the data register 6 through the channel ℓ6, respectively. As a result, the content of the data register 6 becomes such as shown in Fig. 2.

The network address generator 10 in each send address translator 4 outputs the processor number of the processor, in which the process designated by the job number and the within-job processor number given to the fields 6-A and 6-B of the data register 6, respectively, is located, as well as the process number inside that processor for that process, in response to the job number and the within-job processor number described above, and sends them to the fields 7-A and 7-B of the send register 7, respectively. Incidentally, the data given to the field 6-C of the data register 6 is as such given to the field 7-C of the send register 7. As a result, the content of the send register becomes such as shown in Fig. 3.

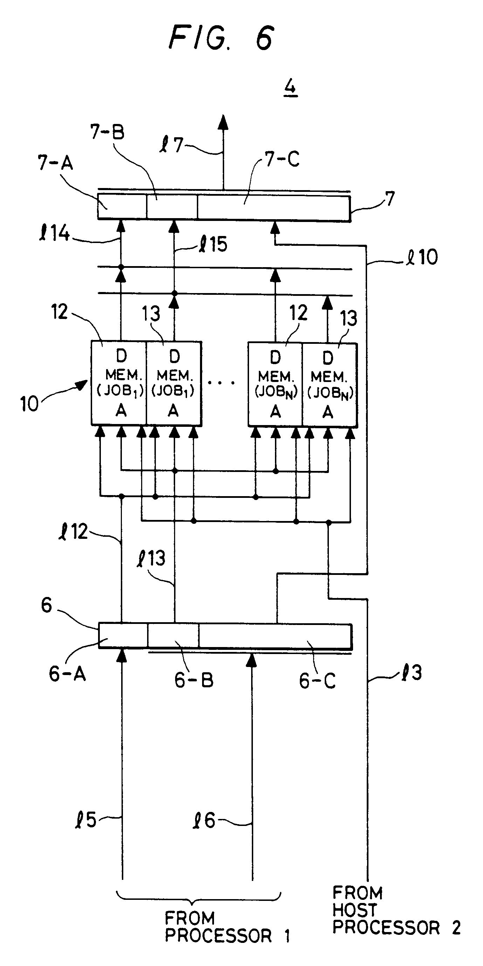

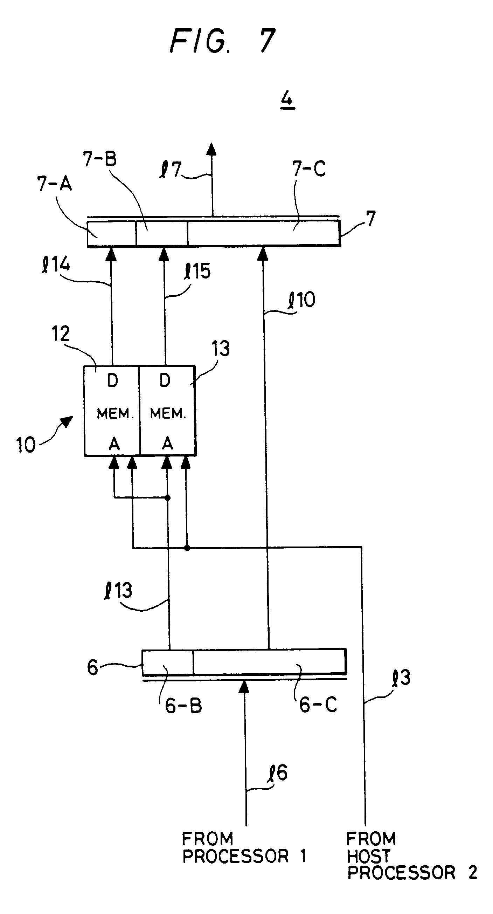

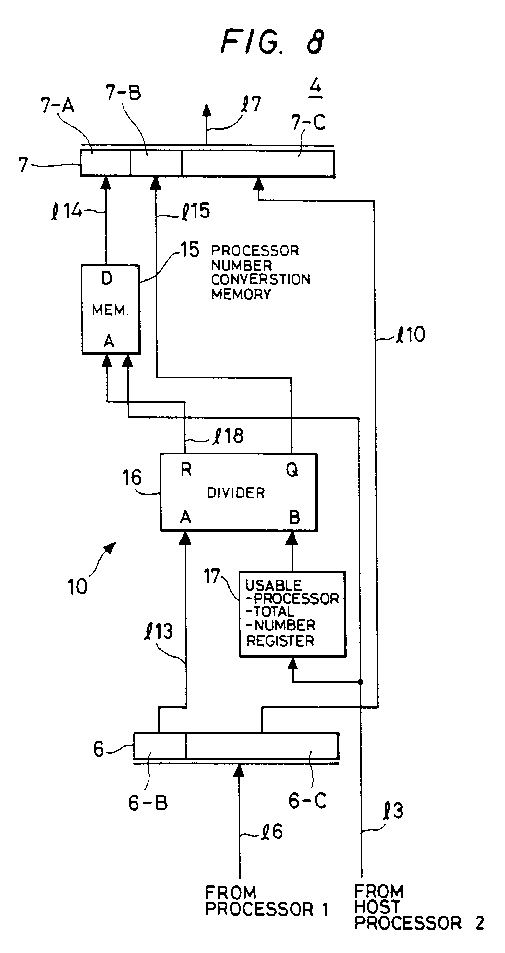

Fig. 6 shows in detail the send address translator 4. The network address generator 10 consists of a memory to which access is made using the job number and the within-job processor number in the fields 6-A and 6-B in the data register 6 as the address and which stores the processor number and within-processor process number of the corresponding processor at its address positions. These data are written in advance by the host processor 2 into this memory through the channels ℓ4, ℓ2 and ℓ3.

More definitely, assuming that the total number of jobs is N, then this memory consists of N-order processor number generation memories 12 and N within-processor process number generation memories 13.

The host processor 2 sets the processor number to which the process having the within-job process number k and belonging to the job number j is allotted to the kth address of the jth processor address generation memory 12 (where j = 1, 2, ..., or N), and the number of the process (within-processor process number) in the processor to which the process having the process number k and belonging to the job number j is allotted to the kth address of the jth within-processor process number generation memory 13 (where j = 1, 2, ..., or N).

The interconnection network 3 is disposed in order to transfer the content of the send register 7 of the sending processor, such as the processor (0), to the receive register 8 of the receiving processor, such as the processor (1).

Assuming, for example, that the processor number for the processor (n) is set to the field 7-A in the send register 7 for the processor (0), the contents of the fields 7-B and 7-C of the send register 7 for the processor (0), that is, the within-processor process number and the data, are transferred to the fields 8-A and 8-B of the receive register 8 in the receive address translator 5 which is connected to the processor (0), respectively. As a result, the content of the receive register 8 becomes such as shown in Fig. 4.

The within-processor-address generator 11 in each receive address translator 5 outputs the address of the receive buffer field prepared by the within-processor number given to the field 8-A of the receive register 8 to the field 9-A of the data register 9 in response to the within-processor process number given to the field 8-A. As a result, the content of the data register 9 becomes such as shown in Fig. 5. Incidentally, the data given to the field 8-B of the receive register 8 is transferred as such to the field 9-B of the data register 9 and written into the position represented by the address in the field 9-A in the receive buffer 100 inside that processor.

The within-processor-address generator 11 consists of a memory to which access is made by use of the within-processor process number as the address, for example, and which stores the receive buffer address. This receive buffer address is written in advance by the host processor through the channels ℓ4, ℓ1 and ℓ3. More definitely, the host processor 2 sets the receive buffer address of the process which is allotted to the processor connected to the receive address translator and has the within-processor process number k, to the kth address of this memory.

Hereinafter, the operation will be described in detail.

Upon receiving the job start command from a user, the control program on the host processor 2 makes the following operations.
(1) The job number is determined for each job so that it does not overlap between all the jobs to be executed simultaneously by this parallel processor system.
(2) Process allotment is made so that which process constituting each job is to be executed as which process of which processor. In other words, the set of the processor number of the processor, that can be used at that point of time, and the process number in that processor is allotted one by one for each set of the job number and the within-job process number that is determined for each process.

In this embodiment, allotment is made under the following condition:
(1):

When the set of the job number and the within-job process number is different, the corresponding set of the processor number and within-processor process number is different.
(3):

The receive buffer region to be used by a given process in the buffer memory 100 in the processor, to which each process constituting each job is allotted, is determined by communication with the processor through the channels ℓ4, ℓ1 and ℓ2, whenever necessary.
(4):

On the basis of the allotment described above, the processor number, the within-processor process number or the address of the receive buffer region is set to the send address translator 4 and receive address translator 5 connected to each processor to which each process constituting this job is allotted through the channels ℓ4, ℓ1 and ℓ3.
(5):

The program determining the operation of each process is transmitted to each process through the channels ℓ4, ℓ1, ℓ2 in accordance with process allotment described above.
(6):

A signal permitting the start of this job is sent to each processor through the channels ℓ4, ℓ1 and ℓ2.

The job on the parallel processor system is started by the operation of the control program on the host processor described above.

Next, the operation of the parallel processor system after the start of the job will be described.

First of all, the processor picks up one process that can be executed among the processes allotted thereto, and executes it. The operation that does not involve data transfer to the other processes is the same as the operation of an ordinary processor system. When the process in execution needs the data transfer to other processes, or when there is instruction in the program to designate the process number and data of the receiving part and to send them, the processor sends the job number to which the process requesting the data transfer belongs, the process number of the receiving part designated by the program and the data to the fields 6-A, 6-B and 6-C of the send data register 6 in the send address translator 4, respectively. Upon receiving them, the send address translator 4 determines the processor number to which the receiving process of the data is allotted and the within-processor process number of the receiving process and gives them to the fields 7-A and 7-B of the send register 7. The content of the field 6-C is given as such to the field 7-C. Then, the interconnection network 3 sends the values of the fields 7-B and 7-C of the send register of the sending part to the fields 8-A and 8-B of the receive register 8 in the receive address translator 5 connected to the processor which is designated by the send processor number given by the field 7-A of the send register 7. Upon receiving these values, the receive address translator 5 determins the address of the receive buffer region of the process from the within-processor process number given to the field 8-A of the receive register 8 and puts it to the field 9-A of the receive data register 9. It puts the data given to the field 8-B of the receive register 8 to the field 9-B of the receive data register 9. Then, the data of 9-B is written into the address designated by 9-A and data communication is thus complete.

### [Embodiment 2]

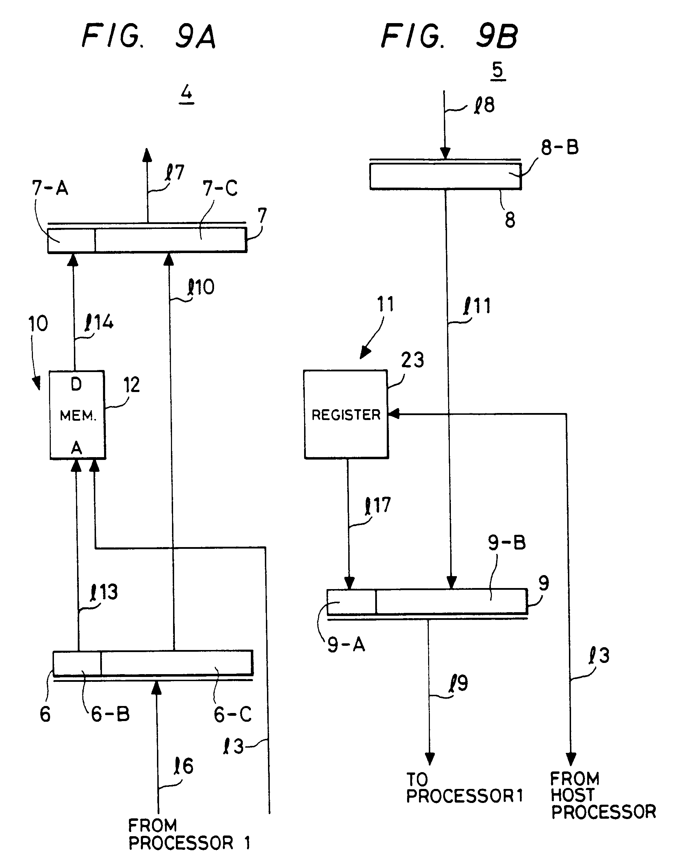

If allotment of the process to the processor by the host processor 2 is made in accordance with the following condition (2), the send address translator shown in Fig. 1 can be more simplified as shown in Fig. 7.

### Allotment condition (2):

The allotment condition (1) is satisfied and all the processes belonging to one processor belong to the same job.

Under the condition described above, each send address translator 4 makes only address translation relating to one job allotted in advance. Therefore, even if the job number is not designated from the processor, address translation can be made on the basis of the within-processor process number. In this case, the network address generator 10 can be composed of a pair of memories consisting of a memory 12 to which access is made by use of the within-processor process number as the address and which outputs the processor number and a memory 13 to which access is made by use of the within-processor process number as the address and outputs the within-processor process number, as shown in Fig. 7. At this time the send register 7 may consist of a register devoid of the field 6-A of Fig. 1, as shown in Fig. 7. It is possible to eliminate also the channels ℓ5 and ℓ12 of Fig. 1.

The receive address translator 5 is the same as one shown in Fig. 1.

### [Embodiment 3]

The send address translator 4 can be constituted by a divider by changing the allotment condition in the following way as shown in Fig. 8.

### Allotment condition (3):

Allotment is made under the allotment condition (2). Namely, the number of processes constituting one job is m and the number of processors executing this job is n. The value n is below the number of processors belonging to the parallel processor system. Here, m processes are divided into the n groups in the following manner.

It will be assumed that when j is divided by n, the quotient is Q and the remainder is R, and the process having the within-job process number j is called "Qth process of Rth group".

Next, correspondence is established on the 1:1 basis between the n groups thus obtained and the n processors used for this job. The number put to the process in each group is used as such as the within-processor process number.

The construction of the send address translator 4 in this case is shown in Fig. 8. In the drawing, reference numeral 16 represents the divider, which divides the value given to its port A by the value given to its port B and outputs the quotient to the port Q and the remainder to the port R. Reference numeral 15 represents a processor number conversion memory. Reference numeral 17 represetns a usable-processor-total-number register, and these elements 15 to 17 constitute the network address generator 10. Data are written in advance to this memory 15 by the host processor in the following manner.

The host processor 2 writes the value n described above into the usable-processor-number register 17 in the send address translator 4 and the number of the processor corresponding to the group of each process described in connection with the allotment method at the position using the group number as the address, as the initial operation of the host processor 2 through the channel ℓ3.

Since this embodiment does not need the job number for translation, either, in the same way as in the foregoing embodiment, the register 6 may be one devoid of the field 7-A in the same way as in Fig. 7. As described above, the usable-processor-number register 17 stores the processor number (n described above) used by the job to which the processes to be executed by the processor connected to the send address translator 4 belongs.

Incidentally, the receive address translator 5 is exactly the same as the translator shown in Fig. 1.

The operation of the send address translator 4 is as follows. This apparatus reproduces the operation of the host processor 2 at the time of process allotment with fidelity. Namely, the divider 16 divides the within-job process number given to the data register 6 by the number of processors executing the job and gives the quotient Q as the within-processor process number to the field 7-B of the send register 7 through the channel ℓ15. The remainder R represents the group number described above and is used as the address input to the processor number conversion memory 15, and the processor number as its output is given to the field 7-A of the send register 7 through the channel ℓ14. The data given to the send data register 6 are handled in the same way as in the foregoing embodiments.

### [Embodiment 4]

The divider 16 can be constituted by a more simplified circuit by limiting the allotment condition of Embodiment 3 in the following manner.

The same allotment condition as the allotment condition (4) is further limited so that p and q are integers, the within-job process number given by the processor 1 is data of p-ary representation and the number n of processors allotted to the job is p^{q}.

At this time, data expressing the value q by the p-ary representation is set in advance to the usable-processor-total-number register 17.

In this case, the divider can be constituted as a selection circuit (not shown) which outputs the q digits from below of the data of the within-job process number given through the channels ℓ13 as the remainder and the upper digits as the quotient.

### [Embodiment 5]

Under the allotment condition described below, the send address generator 4 and the receive address generator 5 can be more simplified as shown in Figs. 9A and 9B, respectively.
Allotment condition (5):

Up to one process is alloted to one processor.

The send address translator 4 does not need the job number. Since up to one process is disposed in one processor, the within-processor process number is not necessary, either. Therefore, a memory 12 to which access is made using the within-job process number as address and which outputs the corresponding processor number can be used as the network address generator 10 as shown in Fig. 9A.

In this case, the data register 6 may be one devoid of the field 6-A of the register of Fig. 1, as shown in Fig. 9A. The send register 7 may be one devoid of the field 7-B of the register 1, as shown in Fig. 9A.

On the other hand, the receive address translator 5 may have only the field 8-B for the data as shown in Fig. 9B. Since it is necessary for the within processor address generator 11 to output only a single buffer address, it may consist of the register 23 alone as shown in Fig. 9B.

### [Embodiment 6]

The network address generator 10 shown in Fig. 1 can be constituted not only by the random-access memories shown in Fig. 6 but also of associative memories.

Hereinafter, the following allotment condition (6) must be satisfied.
Allotment condition (6):

The parallel processor system executes only one job and only one process is allotted to one processor. The within-job process number is made to correspond, in principle, as such to the processor number but if there is any fall-off of the processor number to be used, a number greater than the process number constituting the job is allotted to the processor.

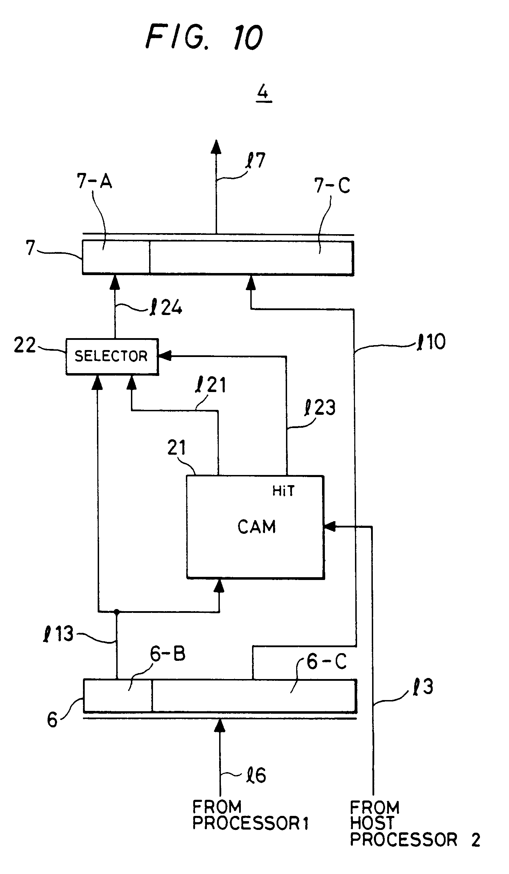

Fig. 10 shows the send address translator 4 in accordance with this embodiment.

In the drawing, reference numeral 6 represents the data register, 7 is the send register, 21 is the associative memory and 22 is a selector. The associative memory 21 outputs a value representing a truth value to the channel ℓ23 if the value inputted from the channel ℓ13 is registered, and outputs the value stored as a set with the value inputted from the channel ℓ13, to the channel ℓ21. It outputs false at other times. The selector outputs the value of the channel 21 to the channel ℓ24 if the value outputted to the channel ℓ23 is the truth value and the value of the channel ℓ13 to the channel ℓ24 if the value is false. The receive address translator 5 is the same as one shown in Fig. 9B.

If there is any processor number which must be dealt with as a fall-off number during allotment described above, the host processor sets the set of the fall-off number and the processor number to be used in place of the former to the associative memory 21 through the channel ℓ3 so that the latter can be associated with and searched by the former.

If the process number given to the data register 6 is not registered as the fall-off number to the associative memory 21 in the operation of the parallel processor system described above, the selector 22 sends as such the process number in the data register 6 to the send register 7 and if it is registered, the selector 22 selects the substituting processor number to be outputted from the associative memory 21 and sends it to the send register 7 as the data send processor number. The data sent from the network through the channel ℓ8 are stored in the receive data register 9 together with the content of the address register 23 and written into the receive buffer region.

### [Embodiment 7]

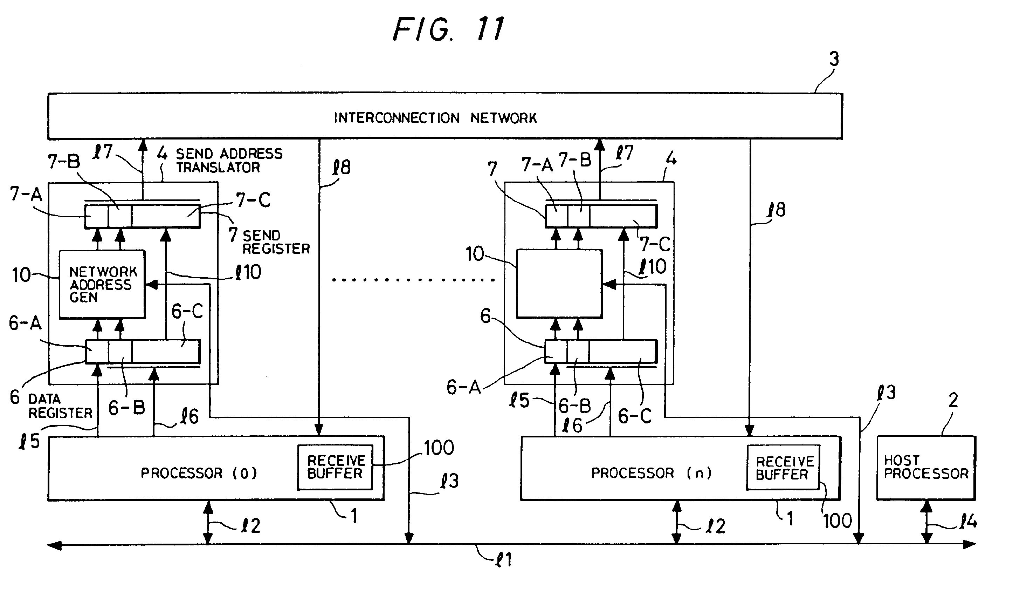

If the host processor 2 initially sets in advance the receive buffer address of the process, not the within-processor process number, to the within-process number generation memory 12 (shown in Fig. 6 or 7) in the send address translator 4 of Embodiment 1 or 2, it becomes possible to eliminate the within-processor address generator 11 and to directly connect the channel ℓ16 to the channel ℓ17. Furthermore, it is possible to eliminate the receive register 8 and to directly connect the channel ℓ8 to the data register 9. Fig. 11 shows a parallel processor system formed in such a fashion.

In each of the embodiments described above, control of processors inside the parallel processor system and distribution of processes are borne by the host processor 2 outside the system, but it is possible in each embodiment described above to provide such functions to one of the processors of the parallel processor system such as the processor 1-0 and to eliminate the host processor 2 and the channel ℓ4.

In each of the embodiments described above, the send address translator 4 and the receive address translator 5 are independent apparatuses of each other and are assorted to the processor 1 and the interconnection network 3, but they may be constituted as part of processor or interconnection network.

The present invention makes it possible to determine the distribution of a plurality of processes that can operate in parallel with one another and make mutual communication to the processors inside the parallel processor system for each job after programming, so that even when the number of processors of the parallel processing system changes, processing can be executed as such without any change. The present invention can correctly execute multi-job.

Even when each processor in the parallel processing system makes multi-processing, communication between the processes can be made correctly, so that a user of the system is released from the concept of the number of processors and the processor.

Therefore, the user can stand on a more abstract programming environment in that a plurality of processes exist, and system versatility can be improved as well.

## Claims

1. A multiple processor system comprising:
a plurality of processors (1) each for executing a plurality of processes which belong to one or plural ones of a plurality of different process groups, wherein plural processes belonging to one of the process groups are allotted in advance to different ones of the plurality of processors;
processes belonging to one of the groups being programmed so as to communicate with other processes belonging to the same group;
each process group being identified by a process group identification code (group ID) to discriminate said each process group from other process groups;
each process within a process group being identified by a process identification code (process ID) to discriminate said each process from other processes within said process group;
each processor (1) including means (6) for providing a combination of the group ID of the process currently executed by a processor (0) and a process ID assigned to another process to which said one process requests to transfer data;
means (4) connected to said processors (1) for identifying a receiving processor (n) in response to the combination of the process ID and the group ID;
transfer means (3) connected to said identifying means (4) and said processors (1) for selectively transferring the data to said receiving processor (n), and
means (5) connected to each of said processors (1) and said transfer means (3) for receiving the data transferred by said transfer means (3).

2. The system of claim 1, wherein each process group comprises processes belonging to a same job.

3. The system of claim 1, wherein said identifying means (4) include means (10) for generating a signal to be used by said another processor (n) and uniquely predetermined for said another process among processes allotted to said another processor (n), said signal being sent together with said data to said another processor.

4. The system of claim 3, wherein said signal is an address of a memory region allotted to said another process, said memory being inside the receiving processor (n) for holding data transferred thereto.

5. The system of claim 1, wherein said identifying means (4) comprises:
a plurality of first means (10) each corresponding to one of said processors (0) and each, in response to a combination provided by the corresponding processor (0) of a process ID for identifying another process which should receive data provided by the process being executed by the corresponding processor (0) and of a group ID for identifying one process group to which the one process belongs, for generating a processor identification code (processor ID) allotted to a receiving processor (n) to which the receiving process is allotted; and
wherein said transfer means (3) comprises second means (5) connected to said plurality of first means (10) and to said processors (1), for transferring data outputted from one of said processors (0) to said designated receiving processor (n).

6. The system of claim 5, including means (11) for outputting, at identification of another processor (n), a within-processor identification code (within-processor ID) for identifying the receiving process among processes allotted to the receiving processor (1), the outputted within-processor ID being sent to the receiving processor (1) together with the data by means of the second means (5).

7. The system of claim 6, further including a plurality of third means (11) each corresponding to one of said processors (1) and connected to said second means, and each third means generating a predetermined signal to be used by a corresponding processor for one process among processes allotted to the corresponding processor having a within-processor ID transferred to the corresponding processor by said second means, and supplying said signal to the corresponding processor.

8. The system of claim 5, wherein each of said plurality of first means (10) includes a memory (12, 13) provided for a corresponding processor for holding ID pairs each including a processor ID for identifying a receiving processor and a within-processor ID for identifying a receiving process allotted to said receiving processor (1)and belonging to a same process group as one process allotted to the transferring processor (1).

9. The system of claim 5, wherein said first means (10) consists of an associative memory (21) for storing a plurality of sets of process identification code and corresponding processor identification code, said associative memory (21) being accessed by said process identification code outputted from the corresponding processor (1), and for outputting said processor identification code inside the set containing the outputted process identification code stored therein, and select means (22) for outputting said processor identification code outputted from said associative memory (21) or said process identification code outputted from the corresponding processor (1) as said processor identification code, in response to whether or not said processor identification code is outputted from said associative memory (21).

10. The system of claim 7, wherein each of said first means (10) consists of a memory for storing the identification code of said processor to which said process designated by each process identification code is allotted, at the address position corresponding to each of a plurality of process identification codes, and for storing said process identification code inside said processor corresponding to said process, and said third means (11) consists of a memory for storing a signal determined in advance for each of said within-processor identification code at its address position corresponding to each of a plurality of within-processor identification codes.

11. The system of claim 7, wherein one or a plurality of processes belonging to the same process group are allotted to each of said processors (1), and each of said first means (10) consists of division means (16) using a within-group process identification code outputted as said process identification code for designating said receiving process from the corresponding processor as its dividend and the total number of said processors, to which all of said processes inside the process group, to which said processes allotted to the corresponding processor belong, are allotted as a divisor, outputting the quotient as said within-processor identification code and the remainder of division as well, and a memory (15) to which access is made by said division means based upon the remainder of division and outputting the processor number of said processor corresponding thereto.

12. The system of claim 5, wherein each of said first means (10) includes further means for generating a predetermined signal for said receiving process in response to said process identification code outputted from the corresponding processor, and said second means includes means for transferring said predetermined signal outputted from each of said first means to the other of said processors together with said data.

13. The system of claim 12, wherein said signal is an address of a memory region allotted to said receiving process inside the receiving processor.

14. The system of claim 7, wherein said signal is an address of a memory region allotted to said another process, the memory region being inside the another processor and holding data transferred thereto.

15. A system of claim 1, wherein said identifying means includes means for providing, at identification of another processor, a within-processor identification code (within-processor ID) for identifying the another process among processes allotted to said another processor, the within-processor ID being sent to said another processor together with the data by said transferring means (3);
wherein said multiple system further includes means connected to said transferring means (3) and said processors (1) and responsive to said within-processor ID transferred to said another processor for generating a signal predetermined to be used by said another processor for said another process.

16. The system-of claim 5, wherein each of said plurality of first means includes means for providing, at identification of another processor, a predetermined signal to be used by said another processor for said another process, the signal being sent to said another processor together with the data by said second means.

17. The system of claim 16, wherein said signal is an address of a memory region allotted to said another process inside said another processor, so as to hold data transferred thereto.

18. The system of claim 1, wherein the identifying means (4) comprises a plurality of memory portions (12, 13) each provided for one of plural process groups, each memory portion having plural processor ID's each for identifying one of the processors to which is allotted another process belonging to one of the plural process groups for which that memory portion is provided.

19. The system of claim 1, wherein said transfer means (3) includes means for generating a predetermined signal for said another process and sending said predetermined signal together with said data to said another processor identified by said identifying means.

20. A method for transmitting data between processors of multiple processor system, wherein a plurality of processes to be executed by the multiple processor system belongs to plural groups and one or plural ones of the plurality of processes are allotted to each processor in such a manner that processes belonging to a same one of the process groups are allotted to different processors, the method comprising the steps of:
generating a group ID for specifying one of the process groups to which one process being executed on one of the processors belongs;
designating a process ID for specifying another process belonging to the one process group and not allotted to the one processor, when data is to be sent to the another process from the one process;
determining another processor to which the another process is allotted, in response to the combination of the generated group ID and the designated process ID; and
transmitting the data selectively to the determined processor.

## Patentansprüche

1. Mehrfachprozessorsystem mit
mehreren Prozessoren (1) jeweils zur Ausführung mehrerer Prozesse, die zu einer oder mehreren einer Vielzahl von verschiedenen Prozeßgruppen gehören, wobei mehrere Prozesse, die zu einer Prozeßgruppe gehören, im voraus verschiedenen der mehreren Prozessoren zugeteilt sind; wobei
Prozesse, die zu einer der Gruppen gehören, derartig programmiert sind, daß sie mit anderen, zur gleichen Gruppe gehörenden Prozessen kommunizieren;
jede Prozeßgruppe durch einen Prozeßgruppen-Identifikationscode (Gruppen-ID) identifiziert wird, um jede der Prozeßgruppen von anderen Prozeßgruppen zu unterscheiden;
jeder Prozeß innerhalb einer Prozeßgruppe durch einen Prozeß-Identifikationscode (Prozeß-ID) identifiziert wird, um jeden dieser Prozesse von anderen Prozessen innerhalb der Prozeßgruppe zu unterscheiden;
jeder Prozessor (1) Einrichtungen (6) aufweist zur Bereitstellung einer Kombination des Gruppen-ID des von einem Prozessor (0) derzeit ausgeführten Prozesses und eines Prozeß-ID, der einem anderen Prozeß zugeordnet ist, an den der eine Prozeß Daten zu übertragen fordert;
Einrichtungen (4), die mit den Prozessoren (1) zur Identifikation eines empfangenden Prozessors (n) in Antwort auf die Kombination des Prozeß-ID und des Gruppen-ID verbunden sind;
einer Übertragungseinrichtung (3), die mit den Identifikationseinrichtungen (4) und den Prozessoren (1) zur selektiven Übertragung der Daten an den empfangenden Prozessor (1) verbunden ist, und
Einrichtungen (5), die mit jedem der Prozessoren (1) und der Übertragungseinrichtung (3) zum Empfangen der von der Übertragungseinrichtung (3) übertragenen Daten verbunden sind.

2. System nach Anspruch 1, wobei jede Prozeßgruppe Prozesse umfaßt, die zu einer selben Aufgabe gehören.

3. System nach Anspruch 1, wobei die Identifikationseinrichtungen (4) Einrichtungen (10) zur Erzeugung eines Signales umfassen, das von dem anderen Prozessor (n) verwendet wird und ausschließlich für denjenigen anderen Prozeß unter den dem anderen Prozessor (n) zugeordneten Prozessen vorgegeben ist, wobei das Signal zusammen mit den Daten an den anderen Prozessor übertragen wird.

4. System nach Anspruch 3, wobei das Signal eine Adresse eines Speicherbereichs ist, der dem anderen Prozeß zugeordnet ist, wobei der Speicher innerhalb des empfangenden Prozessors (n) zur Speicherung der dahin übertragenen Daten vorgesehen ist.

5. System nach Anspruch 1, wobei die Identifikationseinrichtung (4) umfaßt:
mehrere erste Einrichtungen (10), die jeweils einem der Prozessoren (0) entsprechen und jeweils in Antwort auf eine vom entsprechenden Prozessor (0) gelieferte Kombination eines Prozeß-ID zur Identifizierung eines anderen Prozesses, der Daten, die von dem vom entsprechenden Prozessor (0) ausgeführten Prozeß bereitgestellt wurden, empfangen soll, und eines Gruppen-ID zur Identifizierung einer Prozeßgruppe, zu der der eine Prozeß gehört, einen Prozessor-Identifikationscode (Prozessor-ID) erzeugen, der demjenigen empfangenden Prozessor (n) zugeordnet ist, dem der empfangende Prozeß zugeordnet ist; und
wobei die Übertragungseinrichtung (3) eine zweite Einrichtung (5) umfaßt, die mit den mehreren ersten Einrichtungen (10) und den Prozessoren (1) zur Übertragung von Daten, die von einem der Prozessoren (0) an den ausgewählten empfangenden Prozessor (n) ausgegeben wurden, verbunden ist.

6. System nach Anspruch 5, umfassend Einrichtungen (11) zur Ausgabe, bei Identifizierung eines anderen Prozessors, eines Binnenprozessor-Identifikationscodes (Binnenprozessor-ID) zur Identifizierung des empfangenden Prozesses unter den Prozessen, die dem empfangenden Prozessor (1) zugeordnet sind, wobei der ausgegebene Binnenprozessor-ID zusammen mit den Daten mittels der zweiten Einrichtungen (5) an den empfangenden Prozessor (1) gesendet wird.

7. System nach Anspruch 6, ferner umfassend mehrere dritte Einrichtungen (11), die jeweils einem der Prozessoren (1) entsprechen und mit den zweiten Einrichtungen verbunden sind, und jede dritte Einrichtung ein vorgegebenes Signal erzeugt, das von einem entsprechenden Prozessor für einen Prozeß unter den Prozessen, die dem entsprechenden Prozessor zugeordnet sind, verwendet wird, bei dem der Binnenprozessor-ID von der zweiten Einrichtung an den entsprechenden Prozessor übertragen wird, und die das Signal dem entsprechenden Prozessor zuführen.

8. System nach Anspruch 5, wobei jede der mehreren ersten Einrichtungen (10) einen Speicher (12, 13) umfaßt, der für einen entsprechenden Prozessor zum Speichern von ID-Paaren vorgesehen ist, die jeweils ein Prozessor-ID zur Identifizierung eines empfangenden Prozessors und einen Binnenprozessor-ID zur Identifizierung eines dem empfangenden Prozessor (1) zugeordneten empfangenden Prozesses umfaßt, der zu der gleichen Prozeßgruppe wie der eine Prozeß gehört, der dem übertragenden Prozessor (1) zugeordnet ist.

9. System nach Anspruch 5, wobei die ersten Einrichtungen (10) aus einem Assoziativ-Speicher (21) zur Speicherung mehrerer Sätze von Prozeß-Identifikationscodes und entsprechender Prozessor-Identifikationscodes bestehen, wobei auf den Assoziativspeicher (21) durch den Prozeß-Identifikationscode zugegriffen wird, der vom entsprechenden Prozessor (1) ausgegeben ist, und zur Ausgabe des Prozessor-Identifikationscodes innerhalb des Satzes, der den darin gespeicherten ausgegebenen Prozeß-Identifikationscode enthält, und aus einer Auswahleinrichtung (22) zur Ausgabe des Prozessor-Identifikationscodes besteht, der vom Assoziativspeicher (21) ausgegeben wurde, oder des Prozeß-Identifikationscodes, der vom entsprechenden Prozessor (1) als Prozessor-Identifikationscode ausgegeben wurde, je nachdem, ob der Prozessor-Identifikationscode vom Assoziativspeicher (21) ausgegeben wurde oder nicht.

10. System nach Anspruch 7, wobei jede der ersten Einrichtungen (10) aus einem Speicher zur Speicherung des Identifikationscodes desjenigen Prozessors besteht, dem der durch den Prozeß-Identifikationscode bestimmte Prozeß zugeordnet ist, an derjenigen Adressenposition, die jedem von mehreren Prozeß-Identifikationscodes entspricht, und zur Speicherung des Prozeß-Identifikationscodes in dem diesem Prozeß entsprechenden Prozessor, und die dritte Einrichtung (11) aus einem Speicher zur Speicherung eines Signals besteht, das im voraus für jeden der Binnenprozessor-Identifikationscodes an der Adressenposition bestimmt wurde, die jedem von mehreren Binnenprozessor-Identifikationscodes entspricht.

11. System nach Anspruch 7, wobei einer oder mehrere der zur gleichen Prozeßgruppe gehörenden Prozesse jedem der Prozessoren (1) zugeordnet sind und jede der ersten Einrichtungen (10) aus einer Teilungseinrichtung (16) besteht, die einen als den Prozeß-Identifikationscode ausgegebenen Binnengruppen-Prozeßidentifikationscode für die Bestimmung des empfangenden Prozesses des entsprechenden Prozessors als ihren Dividend verwendet und die die Gesamtzahl der Prozessoren, zu der alle Prozesse in der Prozeßgruppe, zu der die dem entsprechenden Prozessor zugeordneten Prozesse gehören, als Divisor verwendet, und den Quotienten als den Binnenprozessor-Identifikationscode und ebenso den Divisionsrest ausgibt, und aus einem Speicher (15) besteht, auf den von der Dividiereinrichtung auf der Grundlage des Divisionsrestes zugegriffen wird und der die Prozessornummer des entsprechenden Prozessors ausgibt.

12. System nach Anspruch 5, wobei jeder der ersten Einrichtungen (10) ferner Einrichtungen zur Erzeugung eines vorgegebenen Signales für den empfangenden Prozeß in Antwort auf den vom entsprechenden Prozessor ausgegebenen Prozeß-Identifikationscode umfaßt, und die zweiten Einrichtungen ferner Einrichtungen zur Übertragung des vorgegebenen Signales umfassen, das von jeder der ersten Einrichtungen an den anderen der Prozessoren zusammen mit den Daten ausgegeben wird.

13. System nach Anspruch 12, wobei das Signal eine Adresse eines Speicherbereiches ist, der dem empfangenden Prozeß innerhalb des empfangenden Prozessors zugewiesen ist.

14. System nach Anspruch 7, wobei das Signal eine Adresse eines Speicherbereichs ist, der dem besagten anderen Prozeß zugewiesen ist, wobei der Speicherbereich in dem anderen Prozessor liegt und die an diesen übertragenen Daten enthält.

15. System nach Anspruch 1, wobei die Identifikationseinrichtungen Einrichtungen zur Bereitstellung eines Binnenprozessor-Identifikationscodes (Binnenprozessor-ID) zur Identifizierung eines anderen Prozesses unter den dem anderen Prozessor zugewiesenen anderen Prozessen bei Identifikation eines anderen Prozessors umfaßt, wobei der Binnenprozessor-ID von der Übertragungseinrichtung (3) zusammen mit den Daten an den anderen Prozessor übertragen wird;
wobei das Mehrfachsystem ferner Einrichtungen umfaßt, die mit der Übertragungseinrichtung (3) und den Prozessoren (1) verbunden sind und auf den Binnenprozessor-ID reagieren, der dem anderen Prozessor zur Erzeugung eines Signales übertragen wird, das für die Verwendung durch den anderen Prozessor für den anderen Prozeß bestimmt ist.

16. System nach Anspruch 5, wobei jede der mehreren ersten Einrichtungen ferner Einrichtungen zur Bereitstellung eines vorgegebenen Signales bei Identifikation eines anderen Prozessors umfaßt, das vom anderen Prozessor für den anderen Prozeß verwendet wird, wobei das Signal zusammen mit den Daten von den zweiten Einrichtungen an den anderen Prozessor übertragen wird.

17. System nach Anspruch 16, wobei das Signal eine Adresse eines Speicherbereichs ist, der dem anderen Prozeß innerhalb des anderen Prozessors zugewiesen ist, um die an diesen übertragenen Daten zu speichern.

18. System nach Anspruch 1, wobei die Identifizierungseinrichtung (4) mehrere Speicherabschnitte (12, 13) umfaßt, die jeweils für eine der mehreren Prozeßgruppen vorgesehen sind, wobei jeder Speicherbereich mehrere Prozessor-IDs aufweist, die jeweils einen der Prozessoren identifizieren, dem ein anderer Prozeß zugeordnet ist, der zu einer der mehreren Prozeßgruppen gehört, für die der Speicherbereich vorgesehen ist.

19. System nach Anspruch 1, wobei die Übertragungseinrichtung (3) Einrichtungen zur Erzeugung eines vorgegebenen Signales für den anderen Prozeß und zum Übertragen des vorgegebenen Signales zusammen mit den Daten an den durch die Identifizierungseinrichtungen identifizierten anderen Prozessor umfaßt.

20. Verfahren zur Übertragung von Daten zwischen Prozessoren eines Mehrfachprozessorsystems, wobei mehrere vom Mehrfachprozessorsystem auszuführende Prozesse mehreren Gruppen zugehören und einer oder mehrere der Prozesse jedem Prozessor in der Weise zugeordnet sind, daß diejenigen Prozesse, die zu einer gleichen Prozeßgruppe gehören, verschiedenen Prozessoren zugeordnet sind, wobei das Verfahren die folgenden Schritte umfaßt:
Erzeugung eines Gruppen-IDs zur Bestimmung einer der Prozeßgruppen, zu dem ein auf einem der Prozessoren ausgeführter Prozeß gehört;
Bestimmung eines Prozeß-IDs zur Bestimmung eines anderen Prozesses, der zu dieser Prozeßgruppe gehört und der diesem Prozessor nicht zugeordnet ist, wenn Daten von dem einen an den anderen Prozeß übertragen werden sollen;
Bestimmung eines anderen Prozessors, dem der andere Prozeß zugeordnet ist in Antwort auf die Kombination des erzeugten Gruppen-IDs und des bestimmten Prozeß-IDs; und
Übertragung der Daten selektiv an den bestimmten Prozessor.

## Revendications

1. Système à processeurs multiples, comprenant:
une pluralité de processeurs (1) servant chacun à exécuter une pluralité de processus qui appartiennent à un ou plusieurs d'une pluralité de groupes de processus différents, dans lequel plusieurs processus appartenant à un des groupes de processus sont attribués à l'avance à des processeurs différents parmi la pluralité de processeurs;
des processus appartenant à l'un des groupes étant programmés de façon à communiquer avec les autres processus appartenant au même groupe;
chaque groupe de processus étant identifié par un code d'identification de groupe de processus (ID groupe) pour distinguer chaque groupe de processus des autres groupes de processus;
au sein d'un groupe de processus, chaque processus étant identifié par un code d'identification de processus (ID processus) pour distinguer chaque processus des autres processus dans ledit groupe de processus;
chaque processeur (1) comportant un moyen (6) pour réaliser une combinaison de l'ID groupe du processus en cours d'exécution par un processeur (0) et de l'ID processus attribué à un autre processus auquel ledit processus demande de transférer des données;
un moyen (4) relié auxdits processeurs (1) pour identifier un processeur de réception (n) en réponse à la combinaison de l'ID processus et de l'ID groupe;
un moyen de transfert (3) relié audit moyen d'identification (4) et auxdits processeurs (1) pour transférer les données d'une manière sélective dans ledit processeur de réception (n), et
un moyen (5) relié à chacun desdits processeurs (1) et audit moyen de transfert (3) pour recevoir les données transférées par ledit moyen de transfert (3).

2. Système selon la revendication 1, dans lequel chaque groupe de processus comprend des processus appartenant à une même tâche.

3. Système selon la revendication 1, dans lequel ledit moyen d'identification (4) comporte un moyen (10) pour produire un signal à utiliser par ledit autre processeur (n) et exclusivement prédéterminé pour ledit autre processus parmi les processus attribués audit autre processeur (n), ledit signal étant appliqué audit autre processeur conjointement avec lesdites données.

4. Système selon la revendication 3, dans lequel ledit signal est une adresse d'une zone de mémoire attribuée audit autre processus, ladite mémoire étant à l'intérieur du processeur de réception (n) pour garder les données qui y sont transférées.

5. Système selon la revendication 1, dans lequel ledit moyen d'identification (4) comporte:
une pluralité de premiers moyens (10) correspondant chacun à un desdits processeurs (O) et chacun, en réponse à une combinaison réalisée par le processeur (O) correspondant d'un ID processus pour identifier un autre processus qui doit recevoir des données fournies par le processus en cours d'exécution par le processeur (O) correspondant et d'un ID groupe pour identifier un premier groupe auquel appartient le premier processus, pour produire un code d'identification de processeur (ID processeur) attribué à un processeur de réception (n) auquel est attribué le processus de réception; et
dans lequel ledit moyen de transfert (3) comporte un second moyen (5) relié à ladite pluralité de premiers moyens (10) et auxdits processeurs (1), pour transférer dans ledit processeur de réception désigné (n) des données de sortie d'un desdits processeurs (O).

6. Système selon la revendication 5, comportant un moyen (11) pour produire, au moment de l'identification d'un autre processeur (n), un code d'identification interne de processeur (ID en-processeur) pour identifier le processus de réception parmi les processus attribués au processeur de réception (1), le code ID en-processeur produit étant appliqué au processeur de réception (1) conjointement avec les données à l'aide du second moyen (5).

7. Système selon la revendication 6, comportant en outre une pluralité de troisièmes moyens (11) correspondant chacun à un desdits processeurs (1) et reliés audit second moyen, et chaque troisième moyen produisant un signal prédéterminé à utiliser par un processeur correspondant pour un processus parmi les processus attribués au processeur correspondant ayant un code ID en-processeur transmis au processeur correspondant par ledit second moyen, et fournissant ledit signal au processeur correspondant.

8. Système selon la revendication 5, dans lequel chaque moyen parmi ladite pluralité de premiers moyens (10) comporte une mémoire (12, 13) prévue pour un processeur correspondant afin de garder des paires de codes ID comprenant chacun un ID processeur pour identifier un processeur de réception et un ID en-processeur pour identifier un processus de réception attribué audit processeur de réception (1) et appartenant à un même groupe de processus en tant que processus attribué au processeur de transfert (1).

9. Système selon la revendication 5, dans lequel ledit premier moyen (10) est constitué par une mémoire associative (21) pour mémoriser une pluralité d'ensembles composés d'un code d'identification de processus et d'un code d'identification de processeur correspondant, ledit code d'identification de processus produit par le processeur correspondant (1) ayant accès à ladite mémoire associative (21), et pour produire ledit code d'identification de processeur à l'intérieur de l'ensemble contenant le code produit d'identification de processus qui y est mémorisé, et un moyen de sélection (22) pour produire comme code d'identification de processeur ledit code d'identification de processeur produit par ladite mémoire associative (21) ou ledit code d'identification de processus produit par le processeur correspondant (1), en réponse au fait que ledit code d'identification de processeur est produit ou n'est pas produit par ladite mémoire associative (21).

10. Système selon la revendication 7, dans lequel chacun desdits premiers moyens (10) est constitué par une mémoire pour mémoriser le code d'identification dudit processeur auquel ledit processus désigné par chaque code d'identification de processus est attribué, à l'emplacement d'adresse correspondant à chaque code parmi une pluralité de codes d'identification de processus, et pour mémoriser ledit code d'identification de processus à l'intérieur dudit processeur correspondant audit processus, et ledit troisième moyen (11) est constitué par une mémoire pour mémoriser un signal déterminé à l'avance pour chacun desdits codes d'identification en-processeur à son emplacement d'adresse correspondant à chaque code parmi une pluralité de codes d'identification en-processeur.

11. Système selon la revendication 7, dans lequel un processus ou une pluralité de processus appartenant au même groupe de processus sont attribués à chacun desdits processeurs (1), et chacun desdits premiers moyens (10) est constitué par un moyen de division (16) utilisant comme dividende un code d'identification de processus au sein d'un groupe produit par le processeur correspondant en tant que code d'identification de processus pour désigner ledit processus de réception et, comme diviseur, le nombre total desdits processeurs auxquels sont attribués tous lesdits processus au sein du groupe de processus auquel appartiennent lesdits processus attribués au processeur correspondant, produisant le quotient en tant que code d'identification en-processeur et également le reste de la division, et une mémoire (15) accessible par ledit moyen de division en fonction du reste de la division et produisant le numéro de processeur dudit processeur correspondant.

12. Système selon la revendication 5, dans lequel chacun desdits premiers moyens (10) comporte en outre un moyen pour produire un signal prédéterminé pour ledit processus de réception en réponse audit code d'identification de processus produit par le processeur correspondant, et ledit second moyen comporte un moyen pour transférer dans l'autre desdits processeurs, conjointement avec lesdites données, ledit signal prédéterminé produit par chacun desdits premiers moyens.

13. Système selon la revendication 12, dans lequel ledit signal est une adresse d'une zone de mémoire attribuée audit processus de réception à l'intérieur du processeur de réception.

14. Système selon la revendication 7, dans lequel ledit signal est une adresse d'une zone de mémoire attribuée audit autre processus, la zone de mémoire étant à l'intérieur de l'autre processeur et contenant des données transférées dans celui-ci.

15. Système selon la revendication 1, dans lequel ledit moyen d'identification comporte un moyen pour produire, au moment de l'identification d'un autre processeur, un code d'identification en-processeur (ID en-processeur) pour identifier l'autre processeur parmi les processus attribués audit autre processeur, l'ID en-processeur étant appliqué audit autre processeur, conjointement avec les données, par ledit moyen de transfert (3); ledit système multiple comprenant en outre un moyen connecté audit moyen de transfert (3) et auxdits processeurs (1) et fonctionnant en réponse à l'ID en-processeur transféré audit autre processeur pour produire un signal prédéterminé à utiliser par ledit autre processeur pour ledit autre processus.

16. Système selon la revendication 5, dans lequel chaque moyen parmi ladite pluralité de premiers moyens comporte un moyen pour produire, au moment de l'identification d'un autre processeur, un signal prédéterminé à utiliser par ledit autre processeur pour ledit autre processus, le signal étant appliqué audit autre processeur, conjointement avec les données, par ledit second moyen.

17. Système selon la revendication 16, dans lequel ledit signal est une adresse d'une zone de mémoire attribuée audit autre processus à l'intérieur dudit autre processeur, de façon à conserver les données transférées dans celui-ci.

18. Système selon la revendication 1, dans lequel le moyen d'identification (4) comporte une pluralité de parties (12, 13) de mémoire prévues chacune pour un groupe parmi une pluralité de groupes de processus, chaque partie de mémoire ayant plusieurs codes ID processeur servant chacun à identifier un des processeurs auquel est attribué un autre processus appartenant à un groupe parmi la pluralité de groupes de processus pour lequel est prévue cette partie de mémoire.

19. Système selon la revendication 1, dans lequel ledit moyen de transfert (3) comporte un moyen pour produire un signal prédéterminé pour ledit autre processus et appliquer ledit signal prédéterminé, conjointement avec lesdites données, audit autre processeur identifié par ledit moyen d'identification.

20. Procédé de transmission de données entre des processeurs d'un système à processeurs multiples, dans lequel une pluralité de processus à exécuter par le système à processeurs multiples appartiennent à plusieurs groupes et un ou plusieurs processus parmi la pluralité de processus sont attribués à chaque processeur de telle manière que les processus appartenant à un même groupe de processus soient attribués à des processeurs différents, le procédé comportant les étapes consistant à:
produire un code ID groupe pour indiquer un des groupes de processus auquel appartient un processus en train d'être exécuté sur un des processeurs;
désigner un code ID processus pour indiquer un autre processus appartenant au premier groupe de processus et non attribué au premier processeur, lorsque des données doivent être transférées du premier processus à l'autre processus;
déterminer un autre processeur auquel est attribué l'autre processus, en réponse à la combinaison du code ID groupe produit et du code ID processus désigné; et
transmettre les données d'une manière sélective au processeur déterminé.
